Europäisches Patentamt

**European Patent Office**

**Office européen des brevets**

(19)

(11) Publication number: **0 059 105**
**A1**

(12) **EUROPEAN PATENT APPLICATION**

(21) Application number: **82300923.8**

(22) Date of filing: **23.02.82**

(51) Int. Cl.³: **G 09 F 1/10,** F 16 B 2/24,
H 04 M 1/21

(30) Priority: **23.02.81 US 236923**

(43) Date of publication of application: **01.09.82**
**Bulletin 82/35**

(84) Designated Contracting States: **AT BE CH DE FR GB IT**
**LI LU NL SE**

(71) Applicant: **RED WING PRODUCTS, INC., 190 Express**
**Street, Plainview New York 11803 (US)**

(72) Inventor: **Coon, Miles, 9 Briar Lane, Great Neck New**
**York 11024 (US)**

(74) Representative: **Jones, Michael Raymond et al,**
**Haseltine Lake & Co. 28 Southampton Buildings**
**Chancery Lane, London WC2A 1AT (GB)**

(54) **A message holder and clip therefor.**

(57) The message holder (10) is disclosed has a clip (15) for affixing to the housing (13) of a telephone (11) while supporting an upright rod (16) in rotatable realtion about a vertical axis. The rod (16) carries, preferably on a perpendicular arm at its upper end, a message holding means (17). Preferably the holding means (17) can be rotated about a horizontal axis while the rod (16) is rotated about a vertical axis. The clip (15) has two cooperating legs (18 and 19), one of which is provided with two apertures for holding the rod (16).

-1-

## A MESSAGE HOLDER

## AND CLIP THEREFOR

This invention relates to a message holder. More particularly, this invention relates to a message holder which can be used on a telephone. Still more particularly, this invention relates to a clip for a message holder.

In many cases, when a message is taken for a missing party via telephone, a written record of the message is usually made on a memo sheet or other slip of paper which is then placed in an appropriate place for the missing party. For example, memos have been tacked on bulletin boards to which the missing party may come to look for messages, or placed on a desk belonging to the missing party, for example, in a business office. However, since the memo sheets are usually small pieces of paper and are loose, the sheets can become misplaced or lost if not picked up in a short period of time.

Accordingly, various types of holders have been used in office or household environments so that written messages can be displayed near a telephone. Generally, these holders are separate from the telephone. Consequently, in some cases, such as on a crowded desk, the

-2-

holder itself may become separated from the telephone to such an extent that the messages thereon are removed from sight. Further, such holders generally rest on a desk or table such that the existence of a message is not readily seen.

Accordingly, it is an object of the invention to provide a holder for holding messages in an attractive readily viewable manner.

It is another object of the invention to provide a relatively simple device for holding messages adjacent a telephone.

It is another object of the invention to provide a relatively simple construction for displaying messages adjacent a telephone in an attractive manner.

It is another object of the invention to provide a means for readily mounting a message holder on a telephone.

Briefly, the invention provides a message holder which is comprised of a clip for attachment to a support such as a telephone, a rod which is mounted in rotatable relation in the clip and a message holding means mounted on the rod at a point remote from the clip.

The clip is made in one piece and has a pair of resilient legs defining a bight for attachment to a housing of a telephone. In addition, one of the legs has a pair of

0059105

apertured portions with apertures in spaced aligned relation for receiving the rod in an upstanding manner. This leg also has a bent portion between the two apertured portions which is bent in a direction toward the other leg of the clip in order to bias the apertured portions away from each other to secure the rod in place while retaining the rod in rotatable relation to the clip. The bent portion also serves to define the bight with the opposite leg of the clip.

The rod is disposed to extend upwardly from the clip and has a perpendicularly disposed arm at an end remote from the clip in order to rotatably mount the message holding means thereon. A suitable stop means is also provided on the end of the arm for retaining the holding means on the arm.

The message holding means may be of any suitable construction. For example, a clamping clip such as described in U.S. Patent 3,456,262 may be used. In this regard, the clamping clip is constructed with a pair of movable mounted jaws which are biased into abutting relation with each other. In addition, the clamping clip may include a display member having a flat display surface rotatably mounted on the clip. Such a construction may be of the type as described in U.S. Patent Application S.N. 915,726 filed June 15, 1978.

-4-

In order to enhance the mounting of the clip on a telephone housing, one of the legs may be provided with a pair of integral tabs which are directed into the bight formed by the clip legs in order to grip the telephone housing.

These and other objects and advantages of the invention will become more apparent from the following detailed description taken in conjunction with the accompanying drawings in which:

Fig. 1 illustrates a perspective view of a message holder according to the invention mounted on a telephone;

Fig. 2 illustrates a side view of the message holder and a partial broken-away view of the telephone housing of Fig. 1;

Fig. 3 illustrates a partially exploded view of the message holder of Fig. 1; and

Fig. 4 illustrates a view of one side of a clip constructed in accordance with the invention.

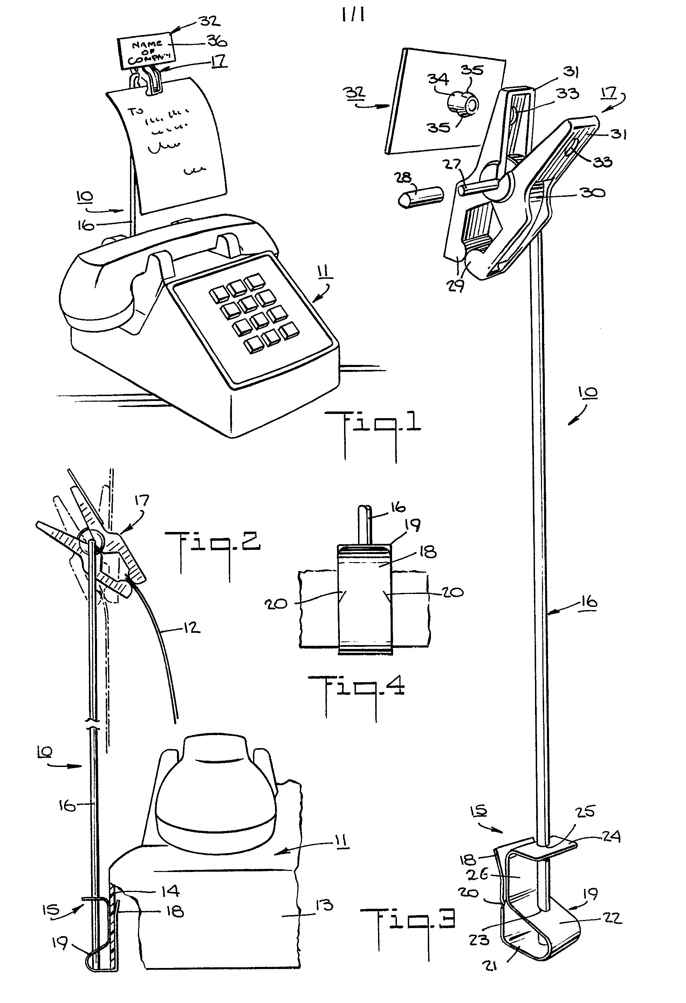

Referring to Fig. 1, the message holder 10 is constructed and sized so as to be adapted for mounting on a telephone 11 so that a written message 12 can be displayed in an elevated prominent position.

Referring to Fig. 2, the telephone 11 is of conventional construction and has a housing 13 with a depending wall 14 which has a free lower edge. The

-5-

message holder 10 includes a clip 15 which is removably attached to the wall 14, a rod 16 which extends upwardly from the clip 15 and a message holding means 17 which is mounted on the rod 16 at a point remote from the clip 15.

Referring to Fig. 3, the clip 15 is made of one piece and includes a pair of legs 18, 19. As indicated in Fig. 2, the legs 18, 19 form a bight within which the wall 14 of the telephone housing 13 is received in a slide fit relationship. The vertical leg 18 is provided with a pair of integral tabs 20 (see Fig. 4) which are cut out from the leg and directed into the bight for gripping the wall 14.

In addition, the clip 15 has a flat base portion 21 which integrally connects the two legs 18, 19. When mounted in place, the flat base portion 21 is substantially flush with the free end of the wall 14. Thus, the clip 15 should be spaced from any table on which the telephone 11 may be mounted. The leg 18 is disposed in perpendicular relation to the base portion 21 so as to stand vertically, as viewed in Fig. 2, relative to the wall 14 of the housing 13. The other leg 19 includes a lower portion 22 which is provided with a circular aperture 23, an upper portion 24 which has a circular aperture 25 aligned with and spaced from the aperture 23 and a bent portion 26 which is intermediate the portions 22, 24. The bent portion 26 is a third portion between portions 22, 24 and is shown as planar in Figure 3. The leg 19

-6-

together with the base portion 21 defines a generally S-shape with the upper portion 24 of the leg 19 disposed in perpendicular relation to the leg 18. As indicated, the aperture 23 is disposed in an angular plane below the aperture 25 and is of a slightly larger diameter. In addition, the bent portion 26 is bent in a direction toward the leg 18 to define the bight therewith while also biasing the apertured portions 22, 24 away from each other.

Referring to Fig. 3, the rod 16 is elongated and is of a length of about 9 and 1/2 inches so as to stand upwardly from the clip 15 over the telephone 11. The rod 16 passes through the apertures 25, 23 in the apertured portions 24, 22 of the clip 15 and is held firmly in place against longitudinal movement due to the biasing force of the bent portion 26 of the clip 15. That is, the apertured portions 22, 24 securely grip the rod 16 to prevent longitudinal movement of the rod 16. However, the rod 16 is free to rotate within the apertures 23, 25. As can be seen in Fig. 3, the rod 16 passes through the aperture 25 in perpendicular relationship while passing through the aperture 23 at an angle. Thus, the rod 16 is gripped and supported at two points by the apertured portion 22. As also indicated, the upper aperture 25 is of a diameter substantially equal to that of the rod 16 while the lower aperture 22 is of a slightly larger diameter so as to

-7-

receive the rod 16 in angular relation.

The rod 16 also has an arm 27 at the upper end which is disposed in perpendicular relation to the remainder of the rod 16. The end of this arm 27 carries a stop means in the form of a cap 28 which is fitted over the arm 27 so as to retain the holding means 17 in place.

As shown in Fig. 3, the holding means 17 is in the form of a clamping clip having a pair of movably mounted jaws 29 which are pivotally mounted on the arm 27 of the rod 16 to rotate about the axis of the arm 27 while being biased into abutting relation with each other via a spring 30. In addition, the clip 17 has a pair of handle portions 31 which extend from the jaws 29 to allow manual opening and closing of the jaws 29, for example to receive or allow removal of one or more messages 12.

In addition, a display member 32 can be mounted on one or both of the handles 31. To this end, each handle 31 has an aperture 33 while the display member 32 has a stem 34 which passes through the aperture 33 in a manner so as to permit rotation of the display member 32 relative to the handle 32 while also having shoulders 35 which fix the display member 32 to the handle 31. The display member 32 may be provided with a flat display surface 36 on which indicia can be placed (see Fig. 1).

The message holder 10 can be made of any suitable

-8-

materials. For example, the clip 15 may be made of spring steel, the rod 16 may be made of steel and the clamping clip 17 may be made of plastic with a steel spring 30.

Referring to Fig. 2, in order to use the message holder 10, the clip 15 is attached to the wall of the telephone housing 13 by slipping the legs 18, 19 over the wall 14. This orients the rod 16 in a vertical direction with the clamping clip 17 elevated over the telephone 11. As shown, the clamping clip 17 holds the message 12 above the plane of the telephone 11. As indicated in Fig. 2, the clamping clip 17 may be rotated 360° about a horizontal axis on the arm 27 of the rod 16 to position the message 12 in various positions. Further, since the rod 16 is rotatable in the clip 15, the clamping clip 17 may also be rotated 360° about a vertical axis. The message holder 10 is thus able to display a message 12 in an attractive elevated position over a telephone 11 in various positions. Thus, for very important messages, the clamping clip 17 may be rotated 180° from the position shown in Fig. 1 so that the message 12 is held above the plane of the clamping clip 17 while the display member 32 is located below the plane of the message 12.

In order to remove the message holder 10 from the telephone 11, the clip 15 is simply slid from the wall 14.

-9-

It is to be noted that the holding means 17 may be of any suitable construction so as to hold a number of messages, for example, up to 100 sheets. To this end, any suitable clamping clip which can be mounted on the arm 27 of the rod 16 may be used other than that as shown in the drawings. Also, the clamping clip 17 need not utilize a display member as illustrated.

The invention thus provides a message holder which is able to maintain messages in place in a safe and secure manner while being held in full view at a telephone.

Further, the message holder can be attached not only to the back of a telephone but also on a side of a telephone. Depending on the disposition of the clip 15 on a telephone, the rod 16 can be rotated to orient the message holding clip 17 in a desired position.

-10-　　　　　　　　　0059105

CLAIMS

1. A message holder comprising:

a clip having two cooperating resilient legs for removable attachment to a support, one of the two legs having a first portion with a first aperture therein and a second portion with a second aperture therein in spaced aligned relationship to the first aperture;

an elongate rod capable of passing through the first and second apertures in the first and second leg portions and being rotatable with respect to the clip; and

a message holding means mounted or mountable on the rod at a point remote from the clip.

2. A message holder as claimed in Claim 1, wherein the rod has a perpendicularly disposed arm at an end remote from the clip, and the message holding means is rotatably mounted or mountable on the arm.

3. A message holder as claimed in Claim 2, which also includes a stop means on an end of the arm for retaining the holding means on the arm.

4. A message holder as claimed in any preceding claim, wherein said one leg of the clip has a third portion inclined with respect to, and located between, the first and second portions of that one leg, the third portion being disposed in a direction toward the other leg of the two legs to define a bight therebetween.

5. A message holder as claimed in Claim 4, wherein the third portion of the one leg biases the first and second portions away from each other to secure the rod in the first and second portions in rotatable relationship.

6. A message holder as claimed in any preceding claim, wherein the message holding means is a clamping clip having a pair of movably mounted jaws biased into abutting relationship with each other.

0059105

7.    A clip having two cooperating resilient legs defining a bight therebetween, one of the legs having a first portion with a first aperture therein, a second portion with a second aperture therein in spaced aligned relationship to the first aperture and a third portion inclined to, and located between, the first and second portions for biasing the first and second portions away from each other, the third portion being disposed in a direction toward the other leg of the two legs to define the bight therebetween.

8.    A clip as claimed in Claim 7 wherein the other leg includes a pair of integral tabs directed into the bight.

9.    A clip as claimed in Claim 7 or 8, which also has a flat base portion integrally connecting the two legs.

10.    In combination:-

a telephone having a housing with a depending wall: and

a message holder mounted on the telephone, the holder having a clip removably attached to the wall and including a leg with a first portion having a first aperture, a second portion having a second aperture aligned with the first aperture and a third portion biasing the first and second portions away from each other; a rod passing through the apertures in the leg portions in rotatable relationship to the clip; and a message holding means mounted on the rod at a position remote from the clip.

Fig.1

Fig.2

Fig.3

Fig.4

0059105

**European Patent Office**

# EUROPEAN SEARCH REPORT

Application number

EP 82 30 0923

## DOCUMENTS CONSIDERED TO BE RELEVANT

| Category | Citation of document with indication, where appropriate, of relevant passages | Relevant to claim | CLASSIFICATION OF THE APPLICATION (Int. Cl. ³) |
|---|---|---|---|
| A | US-A-3 214 122  (FREDERICKSON) *The whole document* | 1,4,5 | G 09 F   1/10 F 16 B   2/24 H 04 M   1/21 |
| A | US-A-1 543 295  (PARKER) *The whole document* | 1,4,5,7 | |
| A | FR-E-   86 736  (PRODUCTS LTD) *The whole document* | 1,7,8 | |
| A | US-A-2 927 701  (LYNDE) *Figure 11* | 2,3,6 | |
| A | US-A-3 469 336  (HALPERIN) *Column 1, lines 65 to 68; column 2, lines 1 to 22; figure 2* | 10 | |

**TECHNICAL FIELDS SEARCHED (Int. Cl. ³)**

F 16 B
G 09 F
H 04 M

The present search report has been drawn up for all claims

| Place of search | Date of completion of the search | Examiner |
|---|---|---|
| THE HAGUE | 03-05-1982 | LUTZ C.H.A. |

EPO Form 1503. 03.82